# EUROPÄISCHE PATENTANMELDUNG

(11) **EP 2 012 280 A2**
(43) Veröffentlichungstag der Anmeldung: **07.01.2009**
(21) Anmeldenummer: 08010987.9
(22) Anmeldetag: 17.06.2008
(51) Int. Cl.: G07F 7/10

(54) **Tragbarer Datenträger und Verfahren zur Personalisierung eines tragbaren Datenträgers**

(30) Priorität: 18.06.2007 DE 102007027935
(71) Anmelder: Giesecke & Devrient GmbH, 81677 München (DE)
(72) Erfinder: Schmalz, Frank, 81371 München (DE)

(57) **Zusammenfassung**

Die Erfindung betrifft einen tragbaren Datenträger (1) mit einem Speicher (5), in dem Dateien (12) abgelegt sind, deren Inhalt jeweils durch eine Prüfsumme abgesichert ist. Der erfindungsgemäße tragbare Datenträger (1) ist zum Einschreiben von Daten in die Dateien (12) in einem Normalmodus und in einem Personalisierungsmodus eingerichtet. Im Normalmodus wird nach jedem Schreibzugriff die Prüfsumme der jeweiligen Datei (12) aktualisiert. Im Personalisierungsmodus werden während einer Schreibphase mehrere Schreibzugriffe ohne nachfolgende Aktualisierung der Prüfsumme durchgeführt und während einer auf die Schreibphase folgenden Absicherungsphase wird eine Aktualisierung der Prüfsummen für die in der Schreibphase geänderten Dateien (12) oder für in der Schreibphase änderbare Dateien (12) durchgeführt.

## Beschreibung

Die Erfindung betrifft einen tragbaren Datenträger. Weiterhin betrifft die Erfindung ein Verfahren zur Personalisierung eines tragbaren Datenträgers.

Ein tragbarer Datenträger kann ein Betriebssystem aufweisen, das in einem Permanentspeicher (ROM) des tragbaren Datenträgers implementiert ist. Weiterhin können in einem tragbaren Datenträger Programme gespeichert sein sowie Daten, die für die Ausführung der Programme benötigt werden. Die Programme und die Daten können in einem insbesondere nichtflüchtigen Speicher (EEPROM) des tragbaren Datenträgers gespeichert sein. Das Einschreiben der Programme und der Daten kann in zwei Stufen erfolgen. Zunächst werden in einer ersten Stufe, die als Initialisierung bezeichnet wird, Daten und Programme, die für eine Vielzahl von tragbaren Datenträgern identisch sind, in den tragbaren Datenträger eingeschrieben. Anschließend werden in einer zweiten Stufe, die als Personalisierung bezeichnet wird, Daten und Programme, die für einen einzelnen tragbaren Datenträger oder für einige wenige tragbare Datenträger spezifisch sind, in den tragbaren Datenträger eingeschrieben.

Im Rahmen der Initialisierung werden beispielsweise Ergänzungen des Betriebssystems des tragbaren Datenträgers in den nichtflüchtigen Speicher eingeschrieben und Dateistrukturen angelegt. Weiterhin wird die nachfolgende Personalisierung vorbereitet.

Bei der Personalisierung werden beispielsweise Anwendungen im nichtflüchtigen Speicher installiert und personenbezogene Daten eingeschrieben.

Die Initialisierung und Personalisierung des tragbaren Datenträgers nimmt in der Regel der Hersteller oder Herausgeber des tragbaren Datenträgers vor. Nach Abschluss der Personalisierung ist der tragbare Datenträger bereit zur Herausgabe an den Anwender.

Es ist bereits bekannt, Daten mittels unterbrechungssicherem Schreiben in einen tragbaren Datenträger einzuschreiben. Beim unterbrechungssicheren Schreiben wird sichergestellt, dass die Daten auch dann vollständig in den tragbaren Datenträger eingeschrieben werden, wenn während des Schreibvorgangs ein Fehler auftritt oder der Schreibvorgang unterbrochen wird.

Weiterhin ist es bekannt, Dateien eines tragbaren Datenträgers mit einer Prüfsumme abzusichern und nach jeder einzelnen Schreiboperation die Prüfsumme der beschriebenen Datei zu aktualisieren. Dadurch kann das Einschreiben der Daten sehr zuverlässig durchgeführt werden und das Risiko eines fehlerhaft personalisierten tragbaren Datenträgers ist sehr gering. Allerdings kann das Einschreiben insbesondere bei großen Datenmengen und/oder umfangreichen Programmen einen erheblichen Zeitaufwand erfordern.

Aus der WO 2006/087192 A1 ist ein Verfahren zur Personalisierung eines tragbaren Datenträgers bekannt, bei dem eine Strukturierung und/ oder ein Inhalt eines Speichers eines tragbaren Datenträgers wenigstens teilweise geändert werden. Bei dem bekannten Verfahren wird die Personalisierung vom tragbaren Datenträger selbst mittels einer Personalisierungssoftware durchgeführt, die wenigstens zeitweise im tragbaren Datenträger implementiert ist.

Die WO 2007/014699 A1 offenbart ein Verfahren zur Ausführung einer Folge von mehreren gleichartigen Kommandos in einem tragbaren Datenträger, wobei für die Ausführung jedes einzelnen dieser Kommandos ein gleicher Satz von Operationen vorgesehen ist. Bei diesem Verfahren werden zwar alle Operationen ausgeführt, allerdings nicht bei jedem einzelnen Kommando. Durch das Auslassen von Operationen kann die für die Ausführung der Kommandos insgesamt benötigte Zeit reduziert werden.

Der Erfindung liegt die Aufgabe zugrunde, eine schnelle Personalisierung eines tragbaren Datenträgers zu ermöglichen und dabei eine Kompatibilität mit standardisierten Abläufen zu gewährleisten.

Diese Aufgabe wird durch einen tragbaren Datenträger mit der Merkmalskombination des Anspruchs 1 und einem Verfahren gemäß Anspruch 8 gelöst.

Der erfindungsgemäße tragbare Datenträger weist einen Speicher auf, in dem Dateien abgelegt sind, deren Inhalt jeweils durch eine Prüfsumme abgesichert ist und ist zum Einschreiben von Daten in die Dateien in einem Normalmodus und in einem Personalisierungsmodus eingerichtet. Im Normalmodus wird nach jedem Schreibzugriff die Prüfsumme der jeweiligen Datei aktualisiert. Im Personalisierungsmodus werden während einer Schreibphase mehrere Schreibzugriffe ohne nachfolgende Aktualisierung der Prüfsumme durchgeführt und während einer auf die Schreibphase folgenden Absicherungsphase wird eine Aktualisierung der Prüfsummen für die in der Schreibphase geänderten Dateien oder für in der Schreibphase änderbare Dateien durchgeführt.

Die Erfindung hat den Vorteil, dass eine Personalisierung des tragbaren Datenträgers schnell durchgeführt werden kann und eine Kompatibilität mit standardisierten Abläufen erzielbar ist.

Der Speicher kann als ein nichtflüchtiger Speicher ausgebildet sein, so dass die Änderungen an den Dateiinhalten erhalten bleiben, bis ein erneuter Schreibzugriff erfolgt.

Die Schreibzugriffe im Normalmodus und im Personalisierungsmodus können durch identische Kommandos veranlasst werden. Dies hat den Vorteil, dass beim Einsatz des tragbaren Datenträgers bezüglich der Kommandos keine Anpassungen erforderlich sind. Weiterhin kann vorgesehen sein, dass die Schreibzugriffe im Normalmodus und/oder im Personalisierungsmodus durch ISO-konforme Kommandos veranlasst werden. Dies ermöglicht einen Einsatz des tragbaren Datenträgers bei Anwendungen, bei denen die Verwendung von ISO-konformen Kommandos erwünscht oder gar erforderlich ist. Insbesondere kann vorgesehen sein, dass die Schreibzugriffe im Normalmodus und/oder im Personalisierungsmodus durch Kommandos gemäß der Norm ISO/IEC 7816 veranlasst werden. Zudem kann vorgesehen sein, dass die Daten im Normalmodus unterbrechungssicher in den Speicher eingeschrieben werden. Dadurch können ein sehr hoher Sicherheitsstandard realisiert und ein zuverlässiger Schutz vor Fehlern gewährleistet werden.

Der tragbare Datenträger kann beispielsweise als eine Chipkarte ausgebildet sein.

Die Erfindung bezieht sich weiterhin auf ein Verfahren zur Personalisierung eines tragbaren Datenträgers. Die Personalisierung wird in einem Personalisierungsmodus durchgeführt und in eine Schreibphase und eine zeitlich auf die Schreibphase folgende Absicherungsphase untergliedert. Während der Schreibphase werden mehrere Schreibzugriffe auf eine Datei oder auf mehrere Dateien des tragbaren Datenträgers durchgeführt, deren Inhalt jeweils durch eine Prüfsumme abgesichert ist. Während der Absicherungsphase werden die Prüfsummen der Dateien, auf die während der Schreibphase ein Schreibzugriff erfolgte oder von Dateien, für die während der Schreibphase ein Schreibzugriff zulässig war, aktualisiert. Nach der Absicherungsphase wird ein Übergang vom Personalisierungsmodus in einen Normalmodus eingeleitet, bei dem nach jedem Schreibzugriff auf eine Datei die Prüfsumme der Datei aktualisiert wird.

Vor der Schreibphase kann eine Authentisierung durchgeführt werden. Dadurch kann der Schutz vor einer nicht autorisierten Durchführung der Personalisierung erhöht werden.

Im Rahmen des erfindungsgemäßen Verfahrens kann eine Auswahl von Dateien vorgegeben werden, auf die während der Schreibphase ein Schreibzugriff zulässig ist. Dies hat den Vorteil, dass die Aktualisierung der Prüfsummen keiner weiteren Vorarbeiten bedarf und sehr effizient durchgeführt werden kann. Die Auswahl von Dateien kann beispielsweise im Rahmen einer Initialisierung des tragbaren Datenträgers vorgegeben werden, die zeitlich vor der Personalisierung durchgeführt wird. Dies lässt sich mit einem vergleichsweise geringen Aufwand durchführen. Insbesondere besteht die Möglichkeit, die Auswahl von Dateien als eine Liste im tragbaren Datenträger zu speichern.

Während der Schreibphase können die Dateien, auf die ein Schreibzugriff erfolgt, gekennzeichnet werden. Ebenso ist es möglich, dass während der Schreibphase die Dateien, auf die ein Schreibzugriff erfolgt, in einer Liste vermerkt werden. Eine weitere Möglichkeit besteht darin, dass während der Absicherungsphase ermittelt wird, auf welche Dateien während der Schreibphase ein Schreibzugriff erfolgte. Alle diese Varianten bieten jeweils den Vorteil, dass die Aktualisierung der Prüfsummen auf die Dateien beschränkt werden kann, auf die tatsächlich ein Schreibzugriff erfolgte.

Die Personalisierung kann wiederholt werden, falls ein Fehler auftritt. Dadurch kann auch bei einem Verzicht auf ein unterbrechungssicheres Einschreiben der Daten eine korrekte Personalisierung gewährleistet werden.

Gemäß einer vorteilhaften Ausgestaltung des erfindungsgemäßen Verfahrens werden die Schreibzugriffe im Normalmodus und/oder im Personalisierungsmodus durch ISO-konforme Kommandos veranlasst. Insbesondere können die Schreibzugriffe im Normalmodus und/oder im Personalisierungsmodus durch Kommandos gemäß der Norm ISO/IEC 7816 veranlasst werden. Weiterhin besteht die Möglichkeit, dass die Schreibzugriffe im Personalisierungsmodus und im Normalmodus durch identische Schreibkommandos veranlasst werden. Im Normalmodus werden die Daten vorzugsweise unterbrechungssicher in den Speicher eingeschrieben.

Die Erfindung wird nachstehend anhand der in der Zeichnung dargestellten Ausführungsbeispiele erläutert, bei denen der tragbare Datenträger als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Es zeigen:
- Fig. 1: eine stark vereinfachte Blockdarstellung einer Anordnung aus einer Chipkarte und einer Personalisierungseinrichtung,
- Fig. 2: eine stark vereinfachte Darstellung eines Ausschnitts des nichtflüchtigen Speichers der Chipkarte,
- Fig. 3: ein Flussdiagramm zur Veranschaulichung der erfindungsgemäßen Vorgehensweise beim Einschreiben von Daten in den nichtflüchtigen Speicher der Chipkarte,
- Fig. 4: ein Flussdiagramm für eine mögliche Vorgehensweise beim Einschreiben von Daten in den nichtflüchtigen Speicher der Chipkarte im Personalisierungsmodus und
- Fig. 5: ein Flussdiagramm für eine mögliche Vorgehensweise beim Einschreiben von Daten in den nichtflüchtigen Speicher der Chipkarte im Normalmodus.

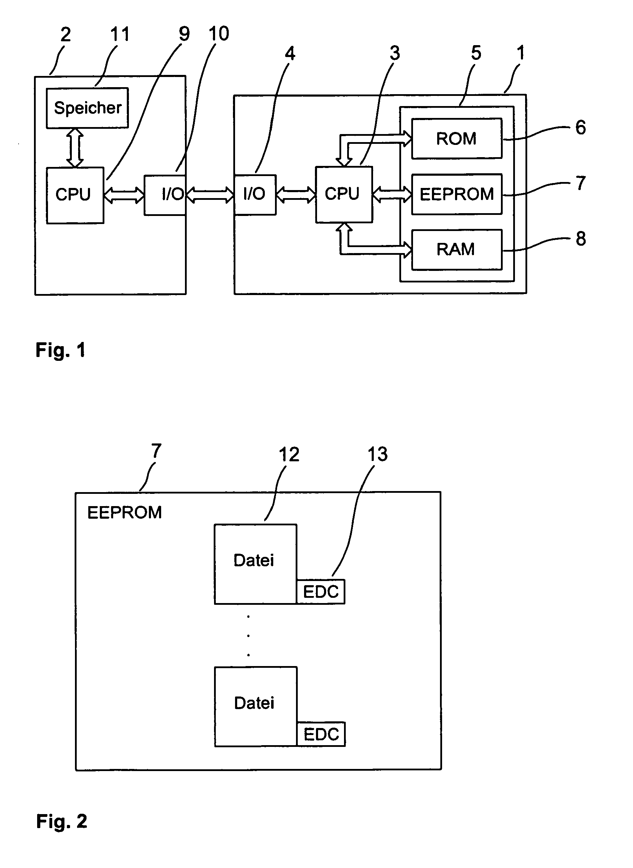

Fig. 1 zeigt eine stark vereinfachte Blockdarstellung einer Anordnung aus einer Chipkarte 1 und einer Personalisierungseinrichtung 2.

Die Chipkarte 1 weist eine Prozessoreinheit 3 auf, welche die Funktionsabläufe der Chipkarte 1 steuert und auch als Central Processing Unit, abgekürzt CPU, bezeichnet wird. Weiterhin weist die Chipkarte 1 eine Schnittstelle 4 zur Ein- und Ausgabe von Daten und einen Speicher 5 auf. Beim dargestellten Ausführungsbeispiel besteht der Speicher 5 aus einem Permanentspeicher 6, einem nichtflüchtigen Speicher 7 und einem flüchtigen Speicher 8. Alternativ dazu ist auch ein anderer Aufbau des Speichers 5 möglich. Die Prozessoreinheit 3 ist mit der Schnittstelle 4, dem Permanentspeicher 6, dem nichtflüchtigen Speicher 7 und dem flüchtigen Speicher 8 verbunden.

Im Permanentspeicher 6, der auch als Read Only Memory, kurz ROM, bezeichnet wird, sind Daten abgelegt, die während der gesamten Lebensdauer der Chipkarte 1 unverändert erhalten bleiben, beispielsweise Software, Parameter, personenbezogene Angaben, Schlüssel usw. Insbesondere ist im Permanentspeicher 6 ein Betriebssystem der Chipkarte 1 gespeichert.

Der flüchtige Speicher 8, der auch als Random Access Memory, kurz RAM, bezeichnet wird, dient als Arbeitsspeicher für die Prozessoreinheit 3, so dass geheime Daten beispielsweise bei der Durchführung von Berechnungen im flüchtigen Speicher 8 zwischengespeichert werden. Im flüchtigen Speicher 8 bleibt der Speicherinhalt nur solange erhalten, wie die Chipkarte 1 mit einer Betriebsspannung versorgt wird.

Der nichtflüchtige Speicher 7 kann während der Lebensdauer der Chipkarte 1 immer wieder neu beschrieben werden. Der jeweilige Speicherinhalt bleibt auch dann erhalten, wenn die Chipkarte 1 nicht mit der Betriebsspannung versorgt wird. Im nichtflüchtigen Speicher 7 sind beispielsweise Ergänzungen zum Betriebssystem, Anwendungssoftware, Schlüssel, Informationen zu einem Fehlbedienungszähler, personenbezogene Daten, Telefonnummern, Transaktionsdaten usw. abgelegt. Der Inhalt des nichtflüchtigen Speichers 7 kann sowohl im Rahmen einer Personalisierung der Chipkarte 1 als auch nach der Personalisierung bei der Benutzung der Chipkarte 1 geändert werden. Im Rahmen der Personalisierung der Chipkarte 1 wird eine umfangreiche Änderung des Inhalts des nichtflüchtigen Speichers 7 vorgenommen, indem eine vergleichsweise große Datenmenge in den nichtflüchtigen Speicher 7 eingeschrieben wird. Bei der Benutzung der Chipkarte 1 werden im Vergleich zur Personalisierung nur geringfügige Änderungen am nichtflüchtigen Speicher 7 vorgenommen, indem beispielsweise ein aktueller Wert eines Fehlbedienungszählers eingeschrieben wird, ein neuer Telefonbucheintrag abgespeichert wird usw.

Die Personalisierungseinrichtung 2 kann ein Bestandteil einer Personalisierungsanlage sein und weist beim dargestellten Ausführungsbeispiel eine Prozessoreinheit 9, eine Schnittstelle 10 und einen Speicher 11 auf. Die Prozessoreinheit 9 ist mit der Schnittstelle 10 und dem Speicher 11 verbunden. Der Speicher 11 kann analog zum Speicher 5 der Chipkarte 1 ausgebildet sein.

Über die Schnittstellen 4 und 10 kann eine Datenübertragung zwischen der Chipkarte 1 und der Personalisierungseinrichtung 2 durchgeführt werden. Beispielsweise können im Rahmen der Personalisierung der Chipkarte 1 Daten von der Personalisierungseinrichtung 2 an die Chipkarte 1 übertragen und in den nichtflüchtigen Speicher 7 der Chipkarte 1 eingeschrieben werden. Der Begriff "Daten" umfasst dabei sowohl Programmcode beispielsweise des Betriebssystems der Chipkarte 1 oder eines Anwendungsprogramms als auch Daten im engeren Sinn wie beispielsweise Benutzerdaten, Schlüssel usw.

Fig. 2 zeigt eine stark vereinfachte Darstellung eines Ausschnitts des nichtflüchtigen Speichers 7 der Chipkarte 1. Die im nichtflüchtigen Speicher 7 abgelegten Daten sind zu Dateien 12 zusammengefasst, um den Zugriff auf die Daten zu erleichtern. Die Dateien 12 können in eine nicht figürlich dargestellte Verzeichnisstruktur eingebunden sein. Jeder Datei 12 ist eine Prüfsumme EDC (Error Detection Code) zugeordnet, die in einem Speicherplatz 13 abgelegt ist. Die Prüfsumme EDC wird beispielsweise nach einem autorisierten Einschreiben in eine der Dateien 12 aus dem Dateiinhalt dieser Datei 12 ermittelt und gespeichert. Durch einen Vergleich des gespeicherten Werts der Prüfsumme EDC mit einem aktuell ermittelten Wert kann dann zu einem späteren Zeitpunkt ermittelt werden, ob eine nicht autorisierte Änderung an der Datei 12 vorgenommen wurde. Es werden daher zumindest funktions- und/oder sicherheitsrelevante Dateien 12 mittels Prüfsummen EDC abgesichert.

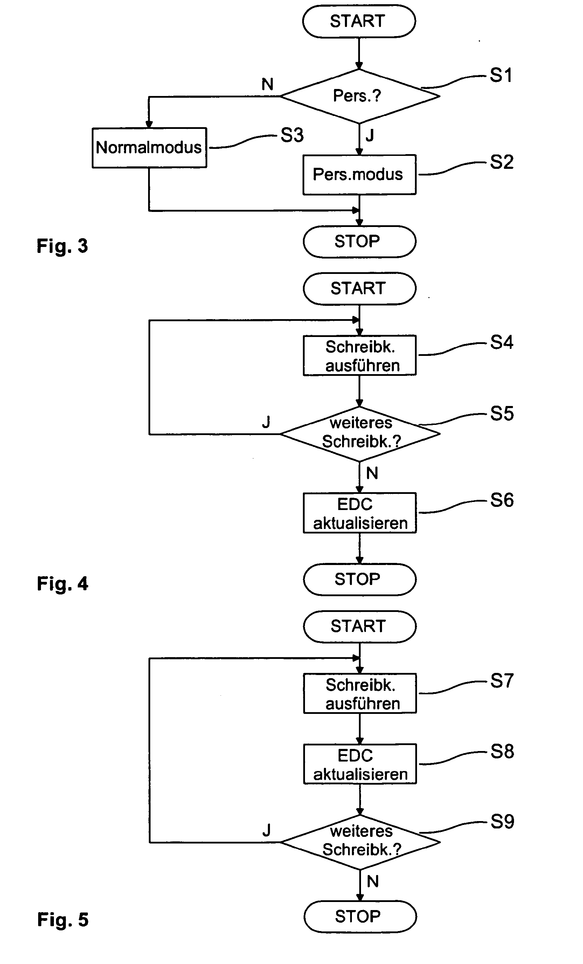

Für die Ermittlung und Speicherung einer Prüfsumme EDC ist allerdings jedes Mal ein gewisser Zeitaufwand erforderlich. Insbesondere bei großen Datenmengen würde eine Aktualisierung der Prüfsumme EDC nach jeder Schreiboperation insgesamt sehr viel Zeit in Anspruch nehmen. Im Rahmen der Erfindung ist es daher vorgesehen, die Häufigkeit der Aktualisierung der Prüfsumme EDC zu reduzieren und auf diese Weise die für die Aktualisierung benötigte Zeit einzusparen. Die diesbezügliche Vorgehensweise wird im Einzelnen anhand der Fig. 3 bis 5 erläutert.

Fig. 3 zeigt ein Flussdiagramm zur Veranschaulichung der erfindungsgemäßen Vorgehensweise beim Einschreiben von Daten in den nichtflüchtigen Speicher 7 der Chipkarte 1.

Der Durchlauf des Flussdiagramms beginnt mit einem Schritt S1, in dem geprüft wird, ob eine Personalisierung der Chipkarte 1 durchgeführt werden soll. Führt die Prüfung zu einem positiven Ergebnis, so wird als nächstes ein Schritt S2 ausgeführt, in dem Daten in einem Personalisierungsmodus in den nichtflüchtigen Speicher 7 eingeschrieben werden. Andernfalls wird im Anschluss an Schritt S1 ein Schritt S3 ausgeführt, in dem Daten in einem Normalmodus in den nichtflüchtigen Speicher 7 eingeschrieben werden. Der Normalmodus und der Personalisierungsmodus unterscheiden sich hinsichtlich der Durchführung der Aktualisierung der Prüfsummen EDC.

Die Chipkarte 1 kann beispielsweise anhand des Master Files, abgekürzt MF, feststellen, ob der Normalmodus oder der Personalisierungsmodus vorliegt. Das Master File stellt ein übergeordnetes Verzeichnis für sämtliche Verzeichnisse und Dateien 12 der Chipkarte 1 dar. Befindet sich das Masterfile im Creation State, so ist der Personalisierungsmodus aktiv. Mit der Aktivierung des Master Files wird ein Übergang vom Personalisierungsmodus in einen Feldmodus eingeleitet. Die Vorgehensweise beim Einschreiben von Daten im Personalisierungsmodus ist in Fig. 4, die Vorgehensweise im Normalmodus in Fig. 5 abgebildet.

Fig. 4 zeigt ein Flussdiagramm für eine mögliche Vorgehensweise beim Einschreiben von Daten in den nichtflüchtigen Speicher 7 der Chipkarte 1 im Personalisierungsmodus.

Der Durchlauf des Flussdiagramms beginnt mit einem Schritt S4, in dem ein Schreibkommando ausgeführt wird und demgemäß Daten in den nichtflüchtigen Speicher 7 der Chipkarte 1 eingeschrieben werden. Das Einschreiben wird nicht nach den Regeln des unterbrechungssicheren Schreibens durchgeführt, so dass sich der Einschreibvorgang einfach und schnell gestaltet. Im Rahmen des Schritts S4 ist auch nicht vorgesehen, die Prüfsumme EDC der durch das Einschreiben geänderten Datei 12 zu aktualisieren. Allerdings kann Daten, bei denen eine Schreibunterbrechung zur Folge hätte, dass das Dateisystem unbenutzbar wäre, eine Sonderstellung eingeräumt werden. Derartige Daten werden entweder außerhalb der hier beschriebenen Personalisierung eingeschrieben oder es wird für diese Daten im Rahmen der Personalisierung ausnahmsweise unterbrechungssicher eingeschrieben.

Im Anschluss an Schritt S4 wird ein Schritt S5 durchgeführt, in dem geprüft wird, ob im Rahmen der Personalisierung ein weiteres Schreibkommando ausgeführt werden soll, um weitere Daten in den nichtflüchtigen Speicher 7 der Chipkarte 1 einzuschreiben. Beispielsweise kann in Schritt S5 geprüft werden, ob das aktuell empfangene Kommando ein vorbestimmtes Kommando (z.B. "Ende der Schreibphase") ist. Das weitere Schreibkommando kann sich auf ein Einschreiben von Daten in dieselbe Datei 12 beziehen, in die beim bisherigen Durchlauf des Flussdiagramms bereits Daten eingeschrieben wurden. Ebenso ist es auch möglich, dass sich das weitere Schreibkommando auf das Einschreiben von Daten in eine Datei 12 bezieht, in die beim bisherigen Durchlauf des Flussdiagramms noch keine Daten eingeschrieben wurden.

Falls ein weiteres Schreibkommando ausgeführt werden soll, wird der Durchlauf des Flussdiagramms unabhängig von der Datei 12, in welche die Daten eingeschrieben werden sollen, mit Schritt S4 fortgesetzt. Andernfalls wird als nächstes ein Schritt S6 ausgeführt, in dem die Prüfsummen EDC der durch das Einschreiben geänderten Dateien 12 aktualisiert werden. Hierbei kann unterschiedlich vorgegangen werden.

Beispielsweise besteht die Möglichkeit, das gesamte Dateisystem des nichtflüchtigen Speichers 7 der Chipkarte 1 zu durchlaufen und für alle Dateien 12, welche geändert wurden, die Prüfsummen EDC zu aktualisieren, d. h. auf Basis der geänderten Dateiinhalte neue Prüfsummen EDC zu ermitteln und abzuspeichern. Hierzu ist es erforderlich, dass die geänderten Dateien 12 entsprechend gekennzeichnet sind. Die Kennzeichnung der geänderten Dateien 12 kann beispielsweise jeweils im Rahmen der Ausführung der Schreibkommandos vorgenommen werden.

Ebenso ist es auch möglich, die Prüfsumme EDC derjenigen Dateien 12 zu aktualisieren, die in einer Liste vermerkt sind. Die Liste kann im nichtflüchtigen Speicher 7 der Chipkarte 1 abgelegt und auf unterschiedliche Weise erzeugt sein. Beispielsweise kann beim Ausführen eines Schreibkommandos der Dateiname der jeweils betroffenen Datei 12 in der Liste vermerkt werden. Ebenso ist es auch möglich, die Liste im Rahmen einer vor der Personalisierung durchgeführten Initialisierung der Chipkarte 1 in den nichtflüchtigen Speicher 7 einzuschreiben. In diesem Fall wird während der Personalisierung dafür Sorge getragen, dass ausschließlich in solche Dateien 12 Daten eingeschrieben werden, die in der Liste genannt sind. Sonstige Dateien 12 sind während der Personalisierung für das Einschreiben gesperrt.

Mit der Ausführung des Schritts S6 ist der Durchlauf des Flussdiagramms beendet.

Die Personalisierung der Chipkarte 1 wird vorzugsweise in einer sicheren Umgebung durchgeführt, um Manipulationsversuche abzuwehren. Zu Beginn der Personalisierung kann eine Authentisierung durchgeführt werden. Falls es während der Personalisierung zu einer Unterbrechung kommt, wird der komplette Personalisierungsvorgang wiederholt. Dadurch kann auch ohne unterbrechungssicheres Schreiben und ohne eine zwischenzeitliche Aktualisierung der Prüfsummen EDC ein hoher Sicherheitsstandard erzielt werden.

Fig. 5 zeigt ein Flussdiagramm für eine mögliche Vorgehensweise beim Einschreiben von Daten in den nichtflüchtigen Speicher 7 der Chipkarte 1 im Normalmodus.

Beim Einschreiben im Normalmodus ist die Chipkarte 1 in der Regel nicht mit der Personalisierungseinrichtung 2 sondern mit einem Endgerät wie beispielsweise einem Mobilfunktelefon, einem Point of Sale (POS) Terminal, einem Geldausgabeautomaten usw. verbunden. Das Einschreiben im Normalmodus kann beispielsweise im Rahmen einer Applikation erfolgen, die auf der Chipkarte 1 implementiert ist.

Der Durchlauf des Flussdiagramms beginnt mit einem Schritt S7, in dem ein Schreibkommando ausgeführt wird und demgemäß Daten in eine der Dateien 12 im nichtflüchtigen Speicher 7 der Chipkarte 1 eingeschrieben werden. Das Einschreiben wird unterbrechungssicher durchgeführt.

Nach Schritt S7 wird ein Schritt S8 durchgeführt, in dem für die Datei 12, in welche in Schritt S7 Daten eingeschrieben wurden, die Prüfsumme EDC aktualisiert wird. Dann wird ein Schritt S9 ausgeführt, in dem abgefragt wird, ob weitere Schreibkommandos ausgeführt werden sollen. Falls dies zutrifft, wird mit Schritt S7 fortgefahren. Andernfalls ist der Durchlauf des Flussdiagramms beendet.

Sowohl im Personalisierungsmodus als auch im Normalmodus kann das Einschreiben der Daten in den nichtflüchtigen Speicher 7 der Chipkarte 1 mit Hilfe von ISO-konformen Schreibkommandos durchgeführt werden. Beispielsweise können Schreibkommandos gemäß der Norm ISO/IEC 7816, insbesondere gemäß der Norm ISO/IEC 7816-13, zum Einsatz kommen.

### Bezugszeichenliste

- 1: Chipkarte
- 2: Personalisierungseinrichtung
- 3: Prozessoreinheit
- 4: Schnittstelle
- 5: Speicher
- 6: Permanentspeicher
- 7: nichtflüchtiger Speicher
- 8: flüchtiger Speicher
- 9: Prozessoreinheit
- 10: Schnittstelle
- 11: Speicher
- 12: Datei
- 13: Speicherplatz

## Patentansprüche

1. Tragbarer Datenträger mit einem Speicher (5), in dem Dateien (12) abgelegt sind, deren Inhalt jeweils durch eine Prüfsumme abgesichert ist, wobei
- der tragbare Datenträger (1) zum Einschreiben von Daten in die Dateien (12) in einem Normalmodus und in einem Personalisierungsmodus eingerichtet ist,
- im Normalmodus nach jedem Schreibzugriff die Prüfsumme der jeweiligen Datei (12) aktualisiert wird und
- im Personalisierungsmodus während einer Schreibphase mehrere Schreibzugriffe ohne nachfolgende Aktualisierung der Prüfsumme durchgeführt werden und während einer auf die Schreibphase folgenden Absicherungsphase eine Aktualisierung der Prüfsummen für die in der Schreibphase geänderten Dateien (12) oder für in der Schreibphase änderbare Dateien (12) durchgeführt wird.

2. Tragbarer Datenträger nach Anspruch 1, **dadurch gekennzeichnet, dass** der Speicher (5) als ein nichtflüchtiger Speicher (7) ausgebildet ist.

3. Tragbarer Datenträger nach einem der vorhergehenden Ansprüche, **dadurch gekennzeichnet, dass** der Datenträger eingerichtet ist, nach Schreibzugriffen auf mehrere Dateien in der Schreibphase, die Prüfsummen der Dateien in der Absicherungsphase zu aktualisieren.

4. Tragbarer Datenträger nach einem der vorhergehenden Ansprüche, **dadurch gekennzeichnet, dass** der Datenträger eingerichtet ist, die Absicherungsphase durchzuführen, wenn er ein Ende der Schreibphase erkennt.

5. Verfahren zur Personalisierung eines tragbaren Datenträgers (1), wobei
- die Personalisierung in einem Personalisierungsmodus durchgeführt wird und in eine Schreibphase und eine zeitlich auf die Schreibphase folgende Absicherungsphase untergliedert wird,
- während der Schreibphase mehrere Schreibzugriffe auf eine Datei (12) oder auf mehrere Dateien (12) des tragbaren Datenträgers (1) durchgeführt werden, deren Inhalt jeweils durch eine Prüfsumme abgesichert ist,
- während der Absicherungsphase die Prüfsummen der Dateien (12), auf die während der Schreibphase ein Schreibzugriff erfolgte oder von Dateien (12), für die während der Schreibphase ein Schreibzugriff zulässig war, aktualisiert werden und
- nach der Absicherungsphase ein Übergang vom Personalisierungsmodus in einen Normalmodus eingeleitet wird, bei dem nach jedem Schreibzugriff auf eine Datei (12) die Prüfsumme der Datei (12) aktualisiert wird.

6. Verfahren nach einem der Ansprüche 5, **dadurch gekennzeichnet, dass** eine Auswahl von Dateien (12) vorgegeben wird, auf die während der Schreibphase ein Schreibzugriff zulässig ist.

7. Verfahren nach Anspruch 6, **dadurch gekennzeichnet, dass** die Auswahl von Dateien (12) im Rahmen einer Initialisierung des tragbaren Datenträgers (1) vorgegeben wird, die zeitlich vor der Personalisierung durchgeführt wird.

8. Verfahren nach einem der Ansprüche 6 oder 7, **dadurch gekennzeichnet, dass** die Auswahl von Dateien (12) als eine Liste im tragbaren Datenträger (1) gespeichert wird.

9. Verfahren nach einem der Ansprüche 5 bis 8, **dadurch gekennzeichnet, dass** während der Schreibphase die Dateien (12), auf die ein Schreibzugriff erfolgt, **gekennzeichnet** werden.

10. Verfahren nach einem der Ansprüche 5 bis 9, **dadurch gekennzeichnet, dass** während der Schreibphase die Dateien (12), auf die ein Schreibzugriff erfolgt, in einer Liste vermerkt werden.

11. Verfahren nach einem der Ansprüche 5 bis 10, **dadurch gekennzeichnet, dass** während der Absicherungsphase ermittelt wird, auf welche Dateien (12) während der Schreibphase ein Schreibzugriff erfolgte.

12. Verfahren nach einem der Ansprüche 5 bis 11, **dadurch gekennzeichnet, dass** die Personalisierung wiederholt wird, falls im Rahmen der Personalisierung ein Fehler auftritt.

13. Verfahren nach einem der Ansprüche 5 bis 12, **dadurch gekennzeichnet, dass** die Schreibzugriffe im Normalmodus und/ oder im Personalisierungsmodus durch ISO-konforme Kommandos, insbesondere gemäß der Norm ISO/IEC 7816, veranlasst werden.

14. Verfahren nach einem der Ansprüche 5 bis 13, **dadurch gekennzeichnet, dass** die Schreibzugriffe im Personalisierungsmodus und im Normalmodus durch identische Schreibkommandos veranlasst werden.

15. Verfahren nach einem der Ansprüche 5 bis 14, **dadurch gekennzeichnet, dass** die Daten im Normalmodus unterbrechungssicher in den Speicher eingeschrieben werden.
